# EUROPÄISCHE PATENTSCHRIFT

(11) **EP 3 120 506 B1**
(45) Veröffentlichungstag und Bekanntmachung des Hinweises auf die Patenterteilung: **25.04.2018**
(21) Anmeldenummer: 15704780.4
(22) Anmeldetag: 12.02.2015
(51) Int. Cl.: H04L 12/40, H04L 12/413, H04L 12/805, H04L 12/26

(54) **TEILNEHMERSTATION FÜR EIN BUSSYSTEM UND VERFAHREN ZUR ERHÖHUNG DER ÜBERTRAGUNGSKAPAZITÄT IN EINEM BUSSYSTEM**
PARTICIPANT STATION FOR A BUS SYSTEM, AND METHOD FOR INCREASING THE TRANSMISSION CAPACITY IN A BUS SYSTEM
POSTE UTILISATEUR POUR SYSTÈME DE BUS ET PROCÉDÉ POUR AUGMENTER LA CAPACITÉ DE TRANSMISSION DANS UN SYSTÈME DE BUS

(30) Priorität: 19.03.2014 DE 102014205120
(43) Veröffentlichungstag der Anmeldung: 25.01.2017
(73) Patentinhaber: Robert Bosch GmbH, 70442 Stuttgart (DE)
(72) Erfinder: WANDEL, Thomas, 71739 Oberriexingen (DE)
(86) Internationale Anmeldenummer: PCT/EP2015/052988
(87) Internationale Veröffentlichungsnummer: WO 2015/139892

(56) Entgegenhaltungen:
- WO-A1-2012/146631
- SILVESTRE J ET AL: "Impact of the use of large frame sizes in fieldbuses for multimedia applications", 10TH IEEE INTERNATIONAL CONFERENCE ON EMERGING TECHOLOGIES AND FACTORY AUTOMATION, IEEE, PISCATAWAY, NJ, USA, Bd. 1, 19. September 2005 (2005-09-19), Seiten 433-440, XP010905362, DOI: 10.1109/ETFA.2005.1612557 ISBN: 978-0-7803-9401-8

## Beschreibung

Die vorliegende Erfindung betrifft eine Teilnehmerstation für ein Bussystem und ein Verfahren zur Erhöhung der Übertragungskapazität in einem Bussystem, die vor allem bei Bussystemen zum Einsatz kommen können, welche Daten gemäß der Spezifikation CAN-FD übertragen.

### Stand der Technik

Für die Kommunikation zwischen zwei oder mehr Busteilnehmern, wie beispielsweise Sensor(en), Steuergerät(en), usw., hat das CAN-Bussystem eine weite Verbreitung gefunden. Beim CAN-Bussystem werden Nachrichten mittels des CAN-Protokolls übertragen, wie es in der CAN-Spezifikation in der IS011898 beschrieben ist.

DE10 000 305 A1 beschreibt das CAN (Controller Area Network) sowie eine als TTCAN (Time Trigger CAN = zeit-getriggertes CAN) bezeichnete Erweiterung des CAN. Das beim CAN verwendete Medienzugriffssteuerverfahren beruht auf einer bitweisen Arbitrierung. Bei CAN wird die bitweise Arbitrierung anhand eines führenden Identifiers innerhalb der über den Bus zu übertragenden Nachricht vorgenommen. WO2012/146631 A1 beschreibt eine mögliche Erweiterung der Größe des Datenfeldes in CAN-Nachrichten, gibt aber keine Hinweise im Hinblick auf die Erfindung, da UDS-Services oder andere Transport-Protokolle und damit zusammenhängende vorteilhafte Datenrahmen-Größen nicht erwähnt werden.

Die IEEE Veröffentlichung "Impact of the use of large frame sizes in fieldbuses for multimedia applications" von J. Silvestre et al, analysiert die Nachrichten-Größen und die jeweils verfügbaren Nutzdatenmengen von unterschiedlichen verfügbaren Bussystemen und beschreibt die Auswirkungen unterschiedlicher Größen auf Systemeigenschaften wie z.B. Latenzzeiten. Es werden keine Vorschläge zur Modifikation oder Anpassung der verfügbaren Bussysteme gemacht.

In jüngster Zeit wurden Techniken vorgeschlagen, wie beispielsweise CAN-FD, bei welchem Nachrichten entsprechend Spezifikation "CAN with Flexible Data-Rate, Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert. Somit können nun Bitraten von größer 1 MBit pro Sekunde (1 Mbps), 2Mbps, 4Mbps und gegebenenfalls höher verwendet werden.

Somit können mit CAN-FD innerhalb der gleichen Zeit mehr Daten übertragen werden als mit CAN. Jedoch ist es im Zuge steigenden Datenverkehrs im Bussystem in einigen Fällen wünschenswert die übertragbare Datenmenge pro Zeit zu erhöhen. Steigender Datenverkehr im Bussystem entsteht auch aufgrund einer zunehmenden Zahl von Teilnehmern des Bussystems.

### Offenbarung der Erfindung

Daher ist es Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, bei welchen die Datenmenge pro Zeiteinheit einfach und kostengünstig erhöht werden kann.

Die Aufgabe wird durch eine Teilnehmerstation für ein Bussystem mit den Merkmalen des Anspruchs 1 gelöst. Die Teilnehmerstation umfasst eine Kommunikationssteuereinrichtung zum Erstellen oder Lesen einer ersten Nachricht für/von mindestens eine/r weiteren Teilnehmerstation des Bussystems, bei welchem zumindest zeitweise ein exklusiver, kollisionsfreier Zugriff einer Teilnehmerstation auf einen Bus des Bussystems gewährleistet ist, wobei die Kommunikationssteuereinrichtung derart ausgestaltet ist, dass sie die erste Nachricht als einen Rahmen erstellt oder liest, welcher eine größere Länge aufweist als die maximale Länge von weiteren Rahmen, als welche zweite Nachrichten im Bussystem übertragen werden, und welcher Daten der ersten Nachricht unsegmentiert aufweist.

Mit der Teilnehmerstation wird die Datenmenge pro Zeiteinheit sehr einfach und kostengünstig erhöht. Insbesondere können Softwareaufwände für Implementierung, Konfiguration und Testabsicherung des ISO-TP 15765 Transportprotokolls entfallen.

Gemäß einer Ausführungsvariante kann durch die Anpassung des CAN-FD-Mediums auf 4 kBytes eine UDS-Kommunikation (UDS = Unified Diagnostic Services = Einheitliche Diagnosedienste) mit einem Datenrahmen von 4096 Bytes verwendet werden. Somit kann die Segmentierung der UDS-Services komplett entfallen, da für einen UDS-Service maximal nur ein CAN-FD-Rahmen (4KB extended) gesendet wird. Somit kann das ISO-TP 15765 Transportprotokoll komplett entfallen, so dass sich folgende Vorteile ergeben.

Ein weiterer Vorteil besteht darin, dass eine Belastung durch Unterbrechungen, die auch Interrupt-Belastung genannt werden kann, der zentralen Verarbeitungseinheit (Central Processing Unit = CPU) aufgrund einer Reduktion der 584 CAN-Rahmen eines UDS-Services auf 1 CAN-FD-4kB-erweiteren-Rahmen sinkt. Ein CAN-Rahmen wird auch CAN-Frame genannt. Ein CAN-FD-4kB-erweiterer-Rahmen wird auch CAN-FD-4kB-extended-Frame genannt.

Zudem ist es vorteilhaft, dass die Rechnerressourcen wie Flash-Speicher und Speicher mit wahlfreiem Zugriff (Read Access Memory = RAM) reduziert werden, da die Software-Implementierung des ISO-TP 15765 Transportprotokolls entfällt und bisher notwendige Zwischenspeicher (Buffer) zur Segmentierung einer Nachricht entfallen.

Zusätzlich wird die effektive Übertragungszeit reduziert. Der Grund hierfür liegt in einem Entfall der Steuerinformationen PCI-Type der segmentierten 583 Rahmen, einem Entfall des ISO-TP-Rahmens "FlowControl", einem Entfall der Zeiten zwischen dem Empfang der Rahmen, und einem Entfall des CAN-Acknowledge (CAN-Bestätigung) der Teilnehmerstationen bei jedem CAN-Rahmen.

Vorteilhafte weitere Ausgestaltungen der Teilnehmerstation sind in den abhängigen Ansprüchen beschrieben.

Die Teilnehmerstation umfasst vorzugsweise zudem eine Sende-/Empfangseinrichtung zum Senden oder Empfangen der ersten Nachricht oder der zweiten Nachricht.

Die erste Nachricht kann eine UDS-Anforderung sein.

Möglicherweise ist die Kommunikationssteuereinrichtung zum Aufbau der ersten Nachricht derart ausgestaltet ist, dass die erste Nachricht am Anfang ein erstes Feld zur Aufnahme eines Protokollinfotyps aufweist, anschließend ein zweites Feld zur Aufnahme der Länge der ersten Nachricht und anschließend ein drittes Feld zur Aufnahme einer Service-Identifikationsnummer der ersten Nachricht aufweist. Hierbei kann das erste Feld 4 Bit umfassen, das zweite Feld 12 Bit umfassen und das dritte Feld 1 Byte umfassen. Zudem kann die Kommunikationssteuereinrichtung zum Aufbau der ersten Nachricht derart ausgestaltet sein, dass die erste Nachricht zudem ein viertes Feld zur Aufnahme von mindestens einer in sich abgeschlossenen Information über einen von der Teilnehmerstation ausgeführten Prozess aufweist. Hierbei kann das vierte Feld eine Länge von 4093 Bytes haben.

Gemäß einem Ausführungsbeispiel ist die erste Nachricht ein CAN-FD-Rahmen mit 4096 Bytes.

Die zuvor beschriebene Teilnehmerstation kann Teil eines Bussystems sein, das einen Bus, und mindestens zwei Teilnehmerstationen aufweist, welche über den Bus derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Erhöhung der Übertragungskapazität in einem Bussystem mit den Merkmalen des Anspruchs 10 gelöst. Das Verfahren umfasst die Schritte: Erstellen oder Lesen, mit einer Kommunikationssteuereinrichtung, einer ersten Nachricht für/von mindestens eine/r weiteren Teilnehmerstation des Bussystems, bei welchem zumindest zeitweise ein exklusiver, kollisionsfreier Zugriff einer Teilnehmerstation auf einen Bus des Bussystems gewährleistet ist, wobei die Kommunikationssteuereinrichtung die erste Nachricht als einen Rahmen erstellt oder liest, welcher eine größere Länge aufweist als die maximale Länge von weiteren Rahmen, als welche zweite Nachrichten im Bussystem übertragen werden, und welcher Daten der ersten Nachricht unsegmentiert aufweist.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet wird;
Fig. 3 ein Schaubild zur Veranschaulichung des Aufbaus einer Nachricht, die von einer weiteren Teilnehmerstation des Bussystems gemäß dem ersten Ausführungsbeispiel gesendet wird;
Fig. 4 ein Blockschaltbild einer Kommunikationssteuereinrichtung einer Teilnehmerstation des Bussystems gemäß dem ersten Ausführungsbeispiel; und
Fig. 5 ein Flussdiagramm eines Verfahrens zur Erhöhung der Übertragungskapazität in einem Bussystem gemäß dem ersten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

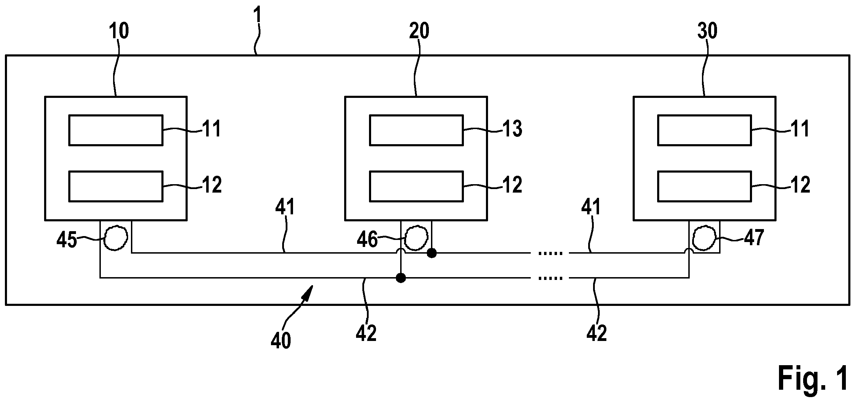

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Teilnehmerstation 20 hat dagegen eine Kommunikationssteuereinrichtung 13 und eine Sende-/Empfangseinrichtung 12. Die Sende-/Empfangseinrichtungen 12 der Teilnehmerstationen 10, 20, 30 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 30 über den Bus 40 mit einer anderen Teilnehmerstation der an den Bus 40 angeschlossenen Teilnehmerstationen 10, 20, 30. Die Sende-/Empfangseinrichtungen 12 dienen jeweils zum Senden der Nachrichten 45, 46, 47 in Form von Signalen im Bussystem 1. Die Kommunikationssteuereinrichtung 13 dient zur Steuerung einer Kommunikation der Teilnehmerstation 20 über den Bus 40 mit einer anderen Teilnehmerstation der an den Bus 40 angeschlossenen Teilnehmerstationen 10, 20, 30.

Die Kommunikationssteuereinrichtungen 11 sind bei diesem Ausführungsbeispiel jeweils zur Verwendung von UDS-Services ausgestaltet. Die Sende-/Empfangseinrichtung 12 kann wie ein herkömmlicher CAN-Transceiver ausgeführt sein. Die Kommunikationssteuereinrichtung 13 ist ebenfalls zur Verwendung von UDS-Services ausgestaltet. Ansonsten kann die Kommunikationssteuereinrichtung 13 wie ein herkömmlicher CAN-Controller ausgeführt sein.

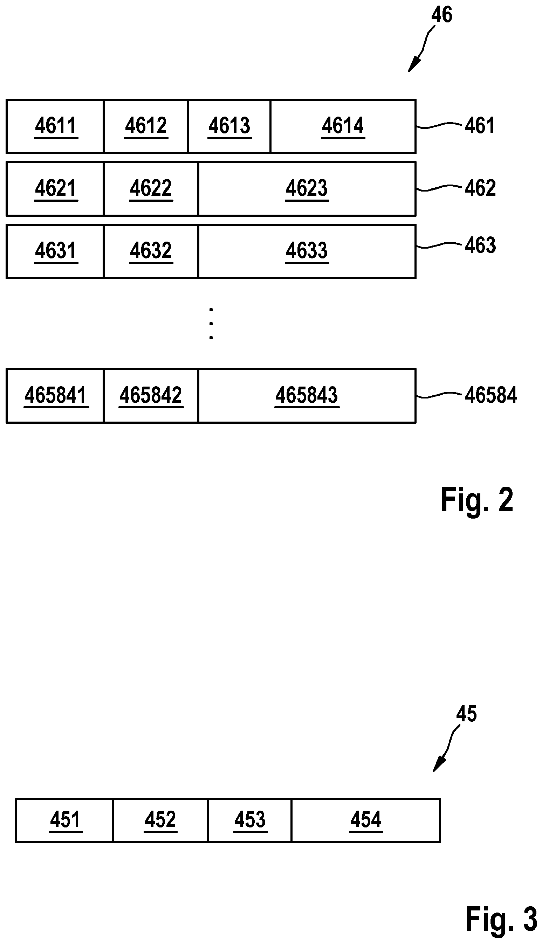

Fig. 2 zeigt eine Nachricht 46 genauer, die gemäß diesem Ausführungsbeispiel eine UDS-Diagnose-Anforderung (UDS-Diagnose-Request) ist, die an die Teilnehmerstation 20 gesendet bzw. von der Teilnehmerstation 20 gesendet wird. Gemäß UDS 14229 ist die Nachricht 46 in jeweils 584 Rahmen, nämlich die Rahmen 461 bis 46584 aufgeteilt, die als CAN-Rahmen 1 bis 584 mit jeweils 8 Bytes konfiguriert sind. Die Rahmen 461 bis 46584 bzw. die CAN-Rahmen 1 bis 584 werden von der Teilnehmerstation 20 nacheinander auf den Bus 40 gesendet bzw. von dort empfangen.

Demzufolge hat bei der Nachricht 46 der erste CAN-Rahmen, also der Rahmen 461, ein Feld 4611, in welchem in 4 Bit der Protokollinfotyp (PCIType) enthalten ist; ein Feld 4612, in welchem in 12 Bit die Länge der Nachricht 46 enthalten ist; ein Feld 4613, in welchem in 1 Byte die Service-Identifikationsnummer (ServiceID) der Nachricht 46 enthalten ist; und ein Feld 4614, in welchem in 6 Bytes Service-Daten (ServiceID) der Nachricht 46 enthalten sind.

Hingegen hat der zweite CAN-Rahmen, also der Rahmen 462, ein Feld 4621, in welchem in 4 Bit der Protokollinfotyp (PCIType) enthalten ist; ein Feld 4622, in welchem in 4 Bit die Sequenznummer (SequenceNo) des CAN-Rahmens enthalten ist; und ein Feld 4623, in welchem in 7 Bytes Service-Daten (ServiceID) der Nachricht 46 enthalten sind.

Der dritte CAN-Rahmen, also der Rahmen 463, hat ein Feld 4631, in welchem in 4 Bit der Protokollinfotyp (PCIType) enthalten ist; ein Feld 4632, in welchem in 4 Bit die Sequenznummer (SequenceNo) des CAN-Rahmens enthalten ist; und ein Feld 4633, in welchem in 7 Bytes Service-Daten (ServiceID) der Nachricht 46 enthalten sind.

Der vierte bis 584-te CAN-Rahmen ist jeweils wie der zweite und dritte CAN-Rahmen 462, 463 aufgebaut, wie in Fig. 2 durch die schwarzen Punkte veranschaulicht. Demzufolge hat der 584-te CAN-Rahmen, also der Rahmen 46584, ein Feld 465841, in welchem in 4 Bit der Protokollinfotyp (PCIType) enthalten ist; ein Feld 465842, in welchem in 4 Bit die Sequenznummer (SequenceNo) des 584-ten CAN-Rahmens enthalten ist; und ein Feld 465843, in welchem in 7 Bytes Service-Daten (ServiceID) der Nachricht 46 enthalten sind.

Die in Fig. 2 dargestellte Nachricht 46 hat die maximal von UDS 14229 darstellbar spezifizierte Länge mittels CAN-Rahmen von 8 Bytes. Die Nachricht 46 ist in der von der ISO-TP 15765 spezifizierten Segmentierung aufgeteilt. Die Nachricht 46 kann jedoch auch weniger CAN-Rahmen von 8 Bytes aufweisen, wenn die Nachricht 46 weniger Daten umfasst.

Im Unterschied dazu zeigt Fig. 3 den Aufbau einer Nachricht 45, wie sie an die Teilnehmerstationen 10, 30 gesendet bzw. von den Teilnehmerstationen 10, 30 gesendet wird. Auch die Nachricht 45 ist gemäß diesem Ausführungsbeispiel eine UDS-Diagnose-Anforderung (UDS-Diagnose-Request). Die Nachricht 45 ist ein CAN-FD-Rahmen mit 4096 Byte. Die Nachricht 45 hat vier Felder, nämlich die Felder 451 bis 454. Das erste Feld 451 der Nachricht 45 enthält in 4 Bit den Protokollinfotyp (PCIType). Das zweite Feld 452 enthält in 12 Bit die Länge der Nachricht 45. Das dritte Feld 453 enthält in 1 Byte die Service-Identifikationsnummer (ServiceID) der Nachricht 45. Das vierte Feld 454 enthält in 4093 Bytes die Service-Daten (ServicelD) der Nachricht 45.

Demzufolge sind die Nachrichten 45, 46 an ihrem Anfang jeweils gleich aufgebaut. Sie haben den gleichen Kopf oder Header. Jedoch folgen bei der Nachricht 46 nach ihrem Kopf 6 Bytes Service-Daten und anschließend bis zu 583 CAN-Rahmen mit jeweils 7 Bytes Service-Daten. Hingegen folgt bei der Nachricht 45 nach ihrem Kopf nur ein Datenfeld, das Feld 454, mit mindestens einem Byte.

Fig. 3 stellt somit einen erweiterten CAN-FD-Rahmen dar. Das heißt, die Nachricht ist ein CAN-FD Rahmen mit mehr als 8 Bytes, nämlich mit beispielsweise 4 kBytes und kann auch als erweiterter CAN-FD-Rahmen oder CAN-FD-erweiterter-Rahmen bezeichnet werden. Somit können ganze UDS-Nachrichten in einer CAN-FD-Nachricht übertragen werden.

Demzufolge sind die Kommunikationssteuereinrichtungen 11 der Teilnehmerstationen 10, 30 zur Erstellung oder zum Lesen von derartigen Nachrichten 45 mit 4096 Bytes ausgestaltet. Da die Nachricht 45 jedoch nicht gemäß dem Transportprotokoll ISO-TP 15765 segmentiert ist, muss in der jeweiligen Kommunikationssteuereinrichtung 11 der Teilnehmerstationen 10, 30 nicht das Transportprotokoll ISO-TP 15765 implementiert sein. Die Daten der Nachricht 45 sind also unsegmentiert.

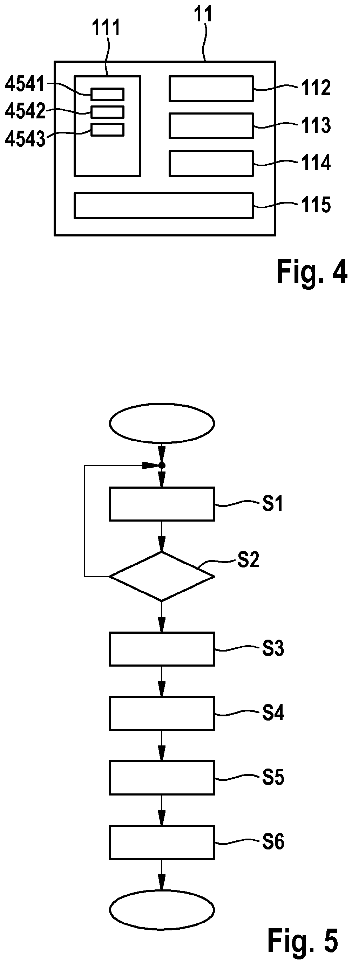

Stattdessen ist die jeweilige Kommunikationssteuereinrichtung 11 der Teilnehmerstationen 10, 30 aufgebaut, wie in Fig. 4 gezeigt.

Gemäß Fig. 4 hat eine Kommunikationssteuereinrichtung 11 einen Buffer 111, eine Auswerteeinheit 112, eine Erfassungseinheit 113 und eine Packeinheit 114. Der Buffer 111 dient zum Speichern von Daten 4541, 4542, 4543. Die Auswerteeinheit 112 dient zum Auswerten, ob eine Bedingung zum Packen der Daten 4541, 4542, 4543 in eine Nachricht 45 erfüllt ist. Die Erfassungseinheit 113 wird von der Auswerteeinheit 112 verwendet. Die Packeinheit 114 dient zum Packen der Daten 4541, 4542, 4543 in eine Nachricht 45. Die Entpackeinheit 115 dient zum Entpacken einer empfangenen Nachricht 45. Dies wird anhand von Fig. 5 näher erläutert.

Gemäß Fig. 5 werden bei einem Verfahren zur Erhöhung der Übertragungskapazität in einem Bussystem bei einem Schritt S1 Daten 4541, 4542, 4543 für eine Nachricht 45, die mit Hilfe der Sende-/Empfangseinrichtung 12 an den Bus 40 gesendet werden soll, in dem Buffer 111 gespeichert. Der Buffer 111 kann ein RAM (RAM = Read Access Memory = Speicher mit wahlfreiem Zugriff) sein, der in der Kommunikationssteuereinrichtung 11 vorhanden ist. In dem Buffer 111 werden Daten 4541, 4542, 4543 gesammelt, welche in die Nachricht 45, genauer gesagt ihr viertes Feld 454, zu packen sind. Die Daten 4541, 4542, 4543 können von einem oder mehr Prozessen kommen, welche bei der Teilnehmerstation 10 ausgeführt werden. Die Daten 4541, 4542, 4543 enthalten jeweils in sich abgeschlossene Informationen. Danach geht der Fluss zu einem Schritt S2 weiter.

Bei dem Schritt S2 wertet die Auswerteeinheit 112 aus, ob die Menge der Daten 4541, 4542, 4543 in dem Buffer 111 eine vorbestimmte Menge, in diesem Fall 4093 Bytes, überschreitet oder eine vorbestimmte Zeitdauer abgelaufen ist. Hierfür verwendet die Auswerteeinheit 112 nach dem Speichern der ersten Daten 4541 in dem Buffer 111 die Erfassungseinheit 113, welche beispielsweise einen Zeitgeber und/oder einen Zähler zum Zählen der Datenmenge der Daten 4541, 4542, 4543 umfasst. Ist entweder die vorbestimmte Menge der Daten 4541, 4542, 4543 überschritten oder die vorbestimmte Zeitdauer abgelaufen, gibt die Auswerteeinheit 112 eine Anforderung an die Packeinheit 113 aus. Danach geht der Fluss zu einem Schritt S3 weiter. Ist weder die vorbestimmte Menge überschritten noch die vorbestimmte Zeitdauer abgelaufen, geht der Fluss zu dem Schritt S1 zurück.

Bei dem Schritt S3 packt die Packeinheit 113 die Daten 4541, 4542, 4543 in das vierte Feld 454 der Nachricht 45 und erstellt die Nachricht 45 mit den Feldern 451 bis 454. Danach geht der Fluss zu einem Schritt S4 weiter.

Bei dem Schritt S4 sendet die Sende-/Empfangseinrichtung 12 die Nachricht 45 auf den Bus 40. Danach geht der Fluss zu einem Schritt S5 weiter.

Bei dem Schritt S5 wird die Nachricht 45 auf dem Bus 40 übertragen und dann bei den entsprechenden anderen Teilnehmerstationen 20, 30 empfangen. Danach geht der Fluss zu einem Schritt S6 weiter.

Bei dem Schritt S6 wird die Nachricht 45 von der Entpackeinheit 115 in beispielsweise der Teilnehmerstation 30 wieder entpackt und die Daten 4541, 4542, 4543 in den Buffer 111 ihrer Kommunikationssteuereinrichtung 11 der Teilnehmerstation 30 gespeichert. Somit stehen die Daten 4541, 4542, 4543 der Teilnehmerstation 10 nun für die Prozesse der Kommunikationssteuereinrichtung 11 der Teilnehmerstation 30 zur Verfügung. Danach ist das Verfahren beendet oder wird neu gestartet.

Bei dem Verfahren läuft der Schritt S1 vorzugsweise gleichzeitig oder zumindest teilweise gleichzeitig mit dem Schritt S2 ab, nachdem die ersten Daten 4541 in den Buffer 111 gespeichert worden sind. Damit kann sichergestellt werden, dass nur Nachrichten 45 gesendet werden, wenn auch Daten 4541 zum Senden vorhanden sind. Alternativ oder zusätzlich kann sichergestellt werden, dass die im Buffer 111 gespeicherten Daten nicht zu lange zurückgehalten werden.

Somit kann die Nachricht 45 Daten umfassen, welche bei einer üblichen CAN-Übertragung jeweils einzeln als Nachrichten gesendet werden. Die Länge der Nachricht 45 ist bei dem vorliegenden Ausführungsbeispiel fest vorgegeben und beträgt 4096 Bytes. Haben hierbei die mit einer Nachricht 45 zu übertragenden Daten 4541 oder 4541, 4542 oder 4541, 4542, 4543 eine geringere Anzahl an Bytes als die fest vorgegebene Länge, wird der nicht benötigte Teil des Feldes 454 beispielsweise mit Nullen aufgefüllt.

Gemäß einem zweiten Ausführungsbeispiel ist die Anzahl der Bytes des Feldes 454 beliebig wählbar. Beispielsweise kann das Feld 454 auch nur mindestens 1 Byte, insbesondere mehr als 6 Bytes oder mehr als 64 Bytes oder mehr als 4093 Bytes aufweisen. Dadurch kann das Auffüllen des Feldes 454 mit beispielsweise Nullen entfallen. Unabhängig von der Anzahl der Bytes des Feldes 454 ist die Nachricht 45 jedoch nicht segmentiert, insbesondere nicht in der von der ISO-TP 15765 spezifizierten Segmentierung aufgeteilt. Die Daten 4541 oder 4541, 4542 oder 4541, 4542, 4543 der Nachricht 45 sind also unsegmentiert.

Alle zuvor beschriebenen Ausgestaltungen des Bussystems 1 der Teilnehmerstationen 10, 20,30 und des Verfahrens gemäß dem ersten und zweiten Ausführungsbeispiel können einzeln oder in allen möglichen Kombinationen Verwendung finden. Zusätzlich sind insbesondere folgende Modifikationen denkbar.

Das zuvor beschriebene Bussystem 1 gemäß dem ersten und/oder zweiten Ausführungsbeispiel ist anhand eines auf dem CAN-Protokoll basierenden Bussystems beschrieben. Das Bussystem 1 gemäß dem ersten und/oder zweiten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 oder einen gemeinsamen Kanal des Busses 40 gewährleistet ist.

Das Bussystem 1 gemäß dem ersten und/oder zweiten Ausführungsbeispiel ist insbesondere ein CAN-Netzwerk oder ein CAN FD-Netzwerk oder ein FlexRay-Netzwerk.

Die Anzahl und Anordnung der Teilnehmerstationen 10, 20, 30 in dem Bussystem 1 gemäß dem ersten und/oder zweiten Ausführungsbeispiel ist beliebig. Insbesondere können auch nur Teilnehmerstationen 10 oder Teilnehmerstationen 30 in dem Bussystem 1 des ersten und/oder zweiten Ausführungsbeispiels vorhanden sein.

Um eine noch höhere Datenrate zu erzielen, kann innerhalb des CAN-Rahmens der Nachrichten 45, 46, 47 die Datenübertragung analog zu Datenübertragungsprotokollen erfolgen, wie beispielsweise Ethernet, usw.

Die Funktionalität der zuvor beschriebenen Ausführungsbeispiele lässt sich auch in einem Transceiver bzw. einer Sende-/Empfangseinrichtung 12 bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder in der Kommunikationssteuereinrichtung 11 oder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Teilnehmerstation (10; 30) für ein Bussystem (1), mit
einer Kommunikationssteuereinrichtung (11) zum Erstellen oder Lesen einer ersten Nachricht (45) für/von mindestens eine/r weiteren Teilnehmerstation des Bussystems (1), bei welchem zumindest zeitweise ein exklusiver, kollisionsfreier Zugriff einer Teilnehmerstation (10, 20, 30) auf einen Bus (40) des Bussystems (1) gewährleistet ist,
wobei die Kommunikationssteuereinrichtung (11) derart ausgestaltet ist, dass sie die erste Nachricht (45) als einen Rahmen erstellt oder liest, welcher eine größere Länge aufweist als die maximale Länge von weiteren Rahmen (461; 462; 46584), als welche zweite Nachrichten (46) im Bussystem (1) übertragen werden, und welcher Daten der ersten Nachricht (45) unsegmentiert aufweist,
wobei die Kommunikationssteuereinrichtung (11) derart ausgestaltet ist, dass in dem Bussystem Daten gemäß der Spezifikation CAN-FD übertragen werden, **dadurch gekennzeichnet, dass** die Kommunikationssteuereinrichtung (11) derart ausgestaltet ist, dass die erste Nachricht ein erweiterter CAN FD-Rahmen mit 4096 Byte ist und die weiteren Rahmen CAN FD-Rahmen sind,
wobei die Kommunikationssteuereinrichtung (11) derart ausgestaltet ist, dass durch die Anpassung des CAN-FD-Mediums auf 4096 Bytes oder 4 kBytes der Datenrahmen für eine UDS-Kommunikation verwendet wird, so dass die Segmentierung der UDS-Services entfallen kann.

2. Teilnehmerstation (10; 30) nach Anspruch 1, wobei die Kommunikationssteuereinrichtung (11) zum Aufbau der ersten Nachricht (45) derart ausgestaltet ist, dass die erste Nachricht (45) am Anfang ein erstes Feld (451) zur Aufnahme eines Protokollinfotyps aufweist, anschließend ein zweites Feld (452) zur Aufnahme der Länge der ersten Nachricht (45) und anschließend ein drittes Feld (453) zur Aufnahme einer Service-Identifikationsnummer der ersten Nachricht (45) aufweist.

3. Teilnehmerstation (10; 30) nach Anspruch 2, wobei das erste Feld (451) eine 4 Bit umfasst, das zweite Feld (452) eine 12 Bit umfasst und das dritte Feld (453) 1 Byte umfasst.

4. Teilnehmerstation (10; 30) nach einem der vorangehenden Ansprüche, wobei die Kommunikationssteuereinrichtung (11) zum Aufbau der ersten Nachricht (45) derart ausgestaltet ist, dass die erste Nachricht (45) zudem ein viertes Feld (451) zur Aufnahme von mindestens einer in sich abgeschlossenen Information über einen von der Teilnehmerstation (10; 30) ausgeführten Prozess aufweist.

5. Teilnehmerstation (10; 30) nach Anspruch 4, wobei das vierte Feld (451) eine Länge von 4093 Bytes hat.

6. Verfahren zur Erhöhung der Übertragungskapazität in einem Bussystem (1), mit den Schritten
Erstellen oder Lesen, mit einer Kommunikationssteuereinrichtung (11), einer ersten Nachricht (45) für/von mindestens eine/r weiteren Teilnehmerstation des Bussystems (1), bei welchem zumindest zeitweise ein exklusiver, kollisionsfreier Zugriff einer Teilnehmerstation (10, 20, 30) auf einen Bus (40) des Bussystems (1) gewährleistet ist,
wobei die Kommunikationssteuereinrichtung (11) die erste Nachricht (45) als einen Rahmen erstellt oder liest, welcher eine größere Länge aufweist als die maximale Länge von weiteren Rahmen (461; 462; 46584), als welche zweite Nachrichten (46) im Bussystem (1) übertragen werden, und welcher Daten der ersten Nachricht (45) unsegmentiert aufweist, **dadurch gekennzeichnet, dass** in dem Bussystem Daten gemäß der Spezifikation CAN-FD übertragen werden,
wobei die erste Nachricht ein erweiterter CAN FD-Rahmen mit 4096 Byte ist, wobei durch die Anpassung des CAN-FD-Mediums auf 4096 Bytes oder 4 kBytes der Datenrahmen für eine UDS-Kommunikation verwendet wird, so dass die Segmentierung der UDS-Services entfallen kann.

7. Verfahren nach Anspruch 6, wobei das erste Feld (451) eine 4 Bit umfasst, das zweite Feld (452) eine 12 Bit umfasst und das dritte Feld (453) 1 Byte umfasst.

8. Verfahren nach Anspruch 6 oder 7, wobei die erste Nachricht (45) am Anfang ein erstes Feld (451) zur Aufnahme eines Protokollinfotyps aufweist, anschließend ein zweites Feld (452) zur Aufnahme der Länge der ersten Nachricht (45) und anschließend ein drittes Feld (453) zur Aufnahme einer Service-Identifikationsnummer der ersten Nachricht (45) aufweist.

9. Verfahren nach einem der Ansprüche 6 bis 8, wobei die erste Nachricht (45) zudem ein viertes Feld (451) zur Aufnahme von mindestens einer in sich abgeschlossenen Information über einen von der Teilnehmerstation (10; 30) ausgeführten Prozess aufweist.

10. Verfahren nach Anspruch 9, wobei das vierte Feld (451) eine Länge von 4093 Bytes hat.

## Claims

1. Subscriber station (10; 30) for a bus system (1), having
a communication control device (11) for generating or reading a first message (45) for/from at least one further subscriber station of the bus system (1), in the case of which, at least intermittently, exclusive, collision-free access by a subscriber station (10, 20, 30) to a bus (40) of the bus system (1) is ensured, wherein the communication control device (11) is configured such that it generates or reads the first message (45) as a frame that has a greater length than the maximum length of further frames (461; 462; 46584), as which second messages (46) are transmitted in the bus system (1), and that has data of the first message (45) in unsegmented form,
wherein the communication control device (11) is configured such that data are transmitted in the bus system in accordance with the CAN FD specification, **characterized in that**
the communication control device (11) is configured such that the first message is an extended CAN FD frame containing 4096 bytes and the further frames are CAN FD frames,
wherein the communication control device (11) is configured such that the adjustment of the CAN FD medium to 4096 bytes or 4 kbytes results in the data frame being used for a UDS communication, so that the segmentation of the UDS services can be dispensed with.

2. Subscriber station (10; 30) according to Claim 1, wherein the communication control device (11) is configured to set up the first message (45) such that the start of the first message (45) has a first field (451) for receiving a protocol information type, subsequently a second field (452) for receiving the length of the first message (45) and subsequently a third field (453) for receiving a service identification number of the first message (45).

3. Subscriber station (10; 30) according to Claim 2, wherein the first field (451) comprises a 4 bits, the second field (452) comprises a 12 bits and the third field (453) comprises 1 byte.

4. Subscriber station (10; 30) according to one of the preceding claims, wherein the communication control device (11) is configured to set up the first message (45) such that the first message (45) moreover has a fourth field (451) for receiving at least one piece of self-contained information about a process carried out by the subscriber station (10; 30).

5. Subscriber station (10; 30) according to Claim 4, wherein the fourth field (451) has a length of 4093 bytes.

6. Method for increasing the transmission capacity in a bus system (1), having the steps of
generating or reading, using a communication control device (11), a first message (45) for/from at least one further subscriber station of the bus system (1), in the case of which, at least intermittently, exclusive, collision-free access by a subscriber station (10, 20, 30) to a bus (40) of the bus system (1) is ensured, wherein the communication control device (11) generates or reads the first message (45) as a frame that has a greater length than the maximum length of further frames (461; 462; 46584), as which second messages (46) are transmitted in the bus system (1), and that has data of the first message (45) in unsegmented form, **characterized in that**
data are transmitted in the bus system in accordance with the CAN FD specification,
wherein the first message is an extended CAN FD frame containing 4096 bytes, wherein the adjustment of the CAN FD medium to 4096 bytes or 4 kbytes results in the data frame being used for a UDS communication, so that the segmentation of the UDS services can be dispensed with.

7. Method according to Claim 6, wherein the first field (451) comprises a 4 bits, the second field (452) comprises a 12 bits and the third field (453) comprises 1 byte.

8. Method according to Claim 6 or 7, wherein the start of the first message (45) has a first field (451) for receiving a protocol information type, subsequently a second field (452) for receiving the length of the first message (45) and subsequently a third field (453) for receiving a service identification number of the first message (45).

9. Method according to one of Claims 6 to 8, wherein the first message (45) moreover has a fourth field (451) for receiving at least one piece of self-contained information about a process carried out by the subscriber station (10; 30).

10. Method according to Claim 9, wherein the fourth field (451) has length of 4093 bytes.

## Revendications

1. Poste d'utilisateur (10; 30) pour système de bus (1), présentant
un dispositif (11) de commande de communication qui établit ou lit un premier message (45) pour ou sur au moins un autre poste d'utilisateur du système de bus (1) dans lequel un accès exclusif et sans collision d'un poste d'utilisateur (10, 20, 30) à un bus (40) du système de bus (1) est garanti au moins pendant une partie du temps,
le dispositif (11) de commande de communication étant configuré de telle sorte qu'il établit ou lit le premier message (45) sous la forme d'une trame qui présente une longueur plus longue que la longueur maximale d'autres trames (461; 462; 46584) sous la forme desquelles des deuxièmes messages (46) qui présentent des données non segmentées du premier message (45) sont transmis dans le système de bus (1),
le dispositif (11) de commande de communication étant configuré de telle sorte que les données sont transmises selon la spécification CAN FD dans le système de bus,
**caractérisé en ce que**
le dispositif (11) de commande de communication est configuré de telle sorte que le premier message est une trame CAN FD qui compte 4096 bytes et les autres trames sont des trames CAN FD,
**en ce que** le dispositif (11) de commande de communication est configuré de telle sorte que par adaptation du médium CAN FD à 4096 bytes ou à 4 kbytes, la trame de données est utilisée pour une communication UDS de telle sorte que la segmentation des services UDS puisse disparaître.

2. Poste d'utilisateur (10; 30) selon la revendication 1, dans lequel le dispositif (11) de commande de communication destiné à établir le premier message (45) est configuré de telle sorte que le premier message (45) présente au début un premier champ (451) de réception d'un type d'info de protocole, avec ensuite un deuxième champ (452) qui reprend la longueur du premier message (45) et enfin un troisième champ (453) qui reprend un numéro d'identification de service du premier message (45).

3. Poste d'utilisateur (10; 30) selon la revendication 2, dans lequel le premier champ (451) comporte un 4 bits, le deuxième champ (452)un 12 bits et le troisième champ (453) 1 byte.

4. Poste d'utilisateur (10; 30) selon l'une des revendications précédentes, dans lequel le dispositif (11) de commande de communication est configuré pour établir le premier message (45) de telle sorte que le premier message (45) présente de plus un quatrième champ (451) qui reprend au moins une information intrinsèquement clôturée concernant un processus exécuté par le poste d'utilisateur (10; 30).

5. Poste d'utilisateur (10; 30) selon la revendication 4, dans lequel le quatrième champ (451) a une longueur de 4093 bytes.

6. Procédé d'augmentation de la capacité de transmission d'un système de bus (1), le procédé présentant les étapes qui consistent à :
à l'aide d'un dispositif (11) de commande de communication, établir ou lire un premier message (45) pour ou sur au moins un autre poste d'utilisateur du système de bus (1) dans lequel un accès exclusif et sans collision d'un poste d'utilisateur (10, 20, 30) à un bus (40) du système de bus (1) est garanti au moins pendant une partie du temps,
le dispositif (11) de commande de communication étant configuré de telle sorte qu'il établit ou lit le premier message (45) sous la forme d'une trame qui présente une longueur plus longue que la longueur maximale d'autres trames (461; 462; 46584) sous la forme desquelles des deuxièmes messages (46) qui présentent des données non segmentées du premier message (45) sont transmis dans le système de bus (1), **caractérisé en ce que**
des données selon les spécifications CAN-FD sont transmises dans le système de bus,
**en ce que** le premier message est une trame CAN FD qui compte 4096 bytes et les autres trames sont des trames CAN FD et
**en ce que** par adaptation du médium CAN FD à 4096 bytes ou à 4 kbytes, la trame de données est utilisée pour une communication UDS de telle sorte que la segmentation des services UDS puisse disparaître.

7. Procédé selon la revendication 6, dans lequel le premier champ (451) comporte un 4 bits, le deuxième champ (452) un 12 bits et le troisième champ (453) 1 byte.

8. Procédé selon les revendications 6 ou 7, dans lequel le premier message (45) présente au début un premier champ (451) de réception d'un type d'info de protocole, avec ensuite un deuxième champ (452) qui reprend la longueur du premier message (45) et enfin un troisième champ (453) qui reprend un numéro d'identification de service du premier message (45).

9. Procédé selon l'une des revendications 6 à 8, dans lequel le premier message (45) présente de plus un quatrième champ (451) qui reprend au moins une information intrinsèquement clôturée concernant un processus exécuté par le poste d'utilisateur (10; 30).

10. Procédé selon la revendication 9, dans lequel le quatrième champ (451) a une longueur de 4093 bytes.
